# EUROPEAN PATENT APPLICATION

(11) **EP 4 502 792 A1**
(43) Date of publication of application: **05.02.2025**
(21) Application number: 23842366.9
(22) Date of filing: 19.07.2023
(51) Int. Cl.: G06F 9/451

(54) **CONTENT DISPLAY METHOD AND ELECTRONIC DEVICE**

(30) Priority: 22.07.2022 CN 202210869398
(71) Applicant: Huawei Technologies Co., Ltd., Shenzhen, Guangdong 518129 (CN)
(72) Inventor: CHENG, Yiyi, Shenzhen, Guangdong 518129 (CN); WANG, Bo, Shenzhen, Guangdong 518129 (CN); LIU, Bin, Shenzhen, Guangdong 518129 (CN)
(74) Representative: Grünecker Patent- und Rechtsanwälte PartG mbB
(86) International application number: PCT/CN2023/108199
(87) International publication number: WO 2024/017304

(57) **Abstract**

This application relates to the field of terminal device technologies, and to a content display method and an electronic device. The content display method includes: An electronic device displays a first window, where the first window is used to display a first interface; and displays a target interface in a second window in response to an operation of a user on the first interface, where the second window and the first window belong to a first task stack, the first task stack is one of a plurality of task stacks, and the second window is the same as or different from the first window. According to the method in embodiments of this application, when the electronic device starts the target interface from the first interface, if a running mode of an instance of the target interface is a single-instance mode, the electronic device can ensure that the target interface exists in the first task stack, and ensure continuity of display content presented in a window of the electronic device, so that the display content is not jumped between a plurality of windows for display. This improves user experience.

## Description

This application claims priority to Chinese Patent Application No. 202210869398.7, filed with the China National Intellectual Property Administration on July 22, 2022 and entitled "CONTENT DISPLAY METHOD AND ELECTRONIC DEVICE", which is incorporated herein by reference in its entirety.

### TECHNICAL FIELD

This application relates to the field of terminal device technologies, and in particular, to a content display method and an electronic device.

### BACKGROUND

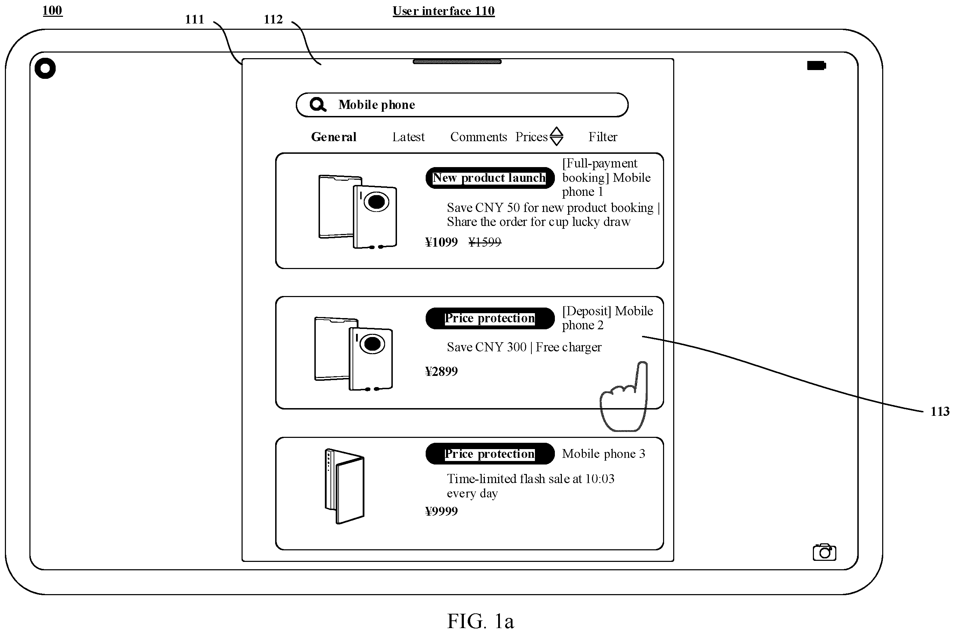

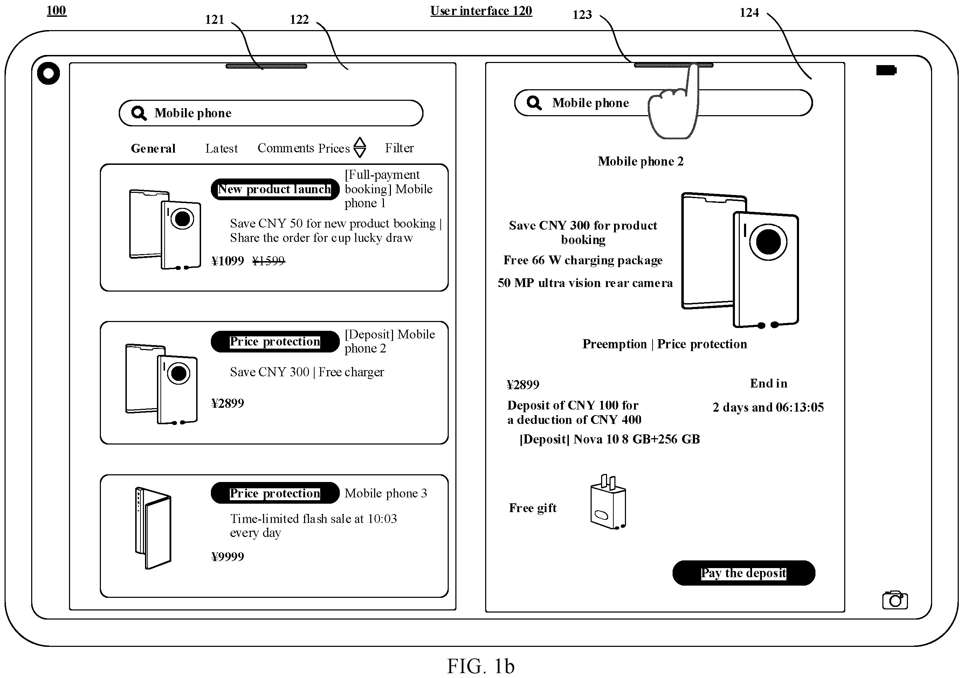

As display manners of an electronic device become increasingly rich, a user may display a plurality of user interfaces of an application on a screen of the electronic device through a plurality of windows simultaneously, to present richer display content. For example, as shown in FIG. 1a to FIG. 1e, a main window is displayed on a screen of an electronic device 100, and a commodity overview interface of a shopping application is displayed in the main window. In an "app multiplier mode", also referred to as a preset display mode, set on the electronic device 100, the electronic device 100 responds to tapping, by the user, a commodity link of a commodity on the commodity overview interface, the main window and an auxiliary window are arranged in parallel on the screen of the electronic device 100 simultaneously, and a commodity information interface is displayed in the auxiliary window (as shown in FIG. 1b).

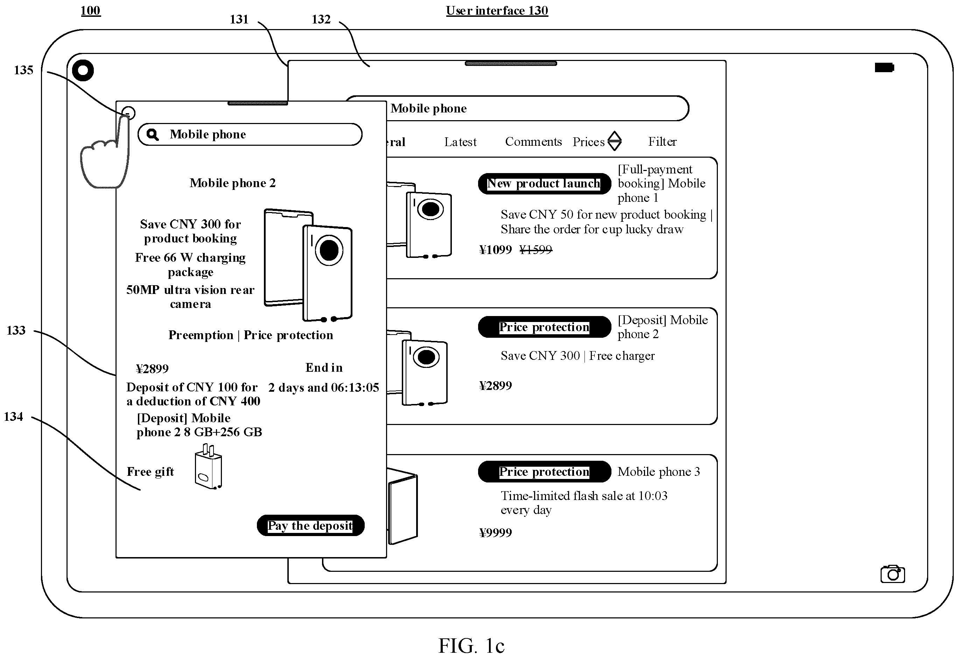

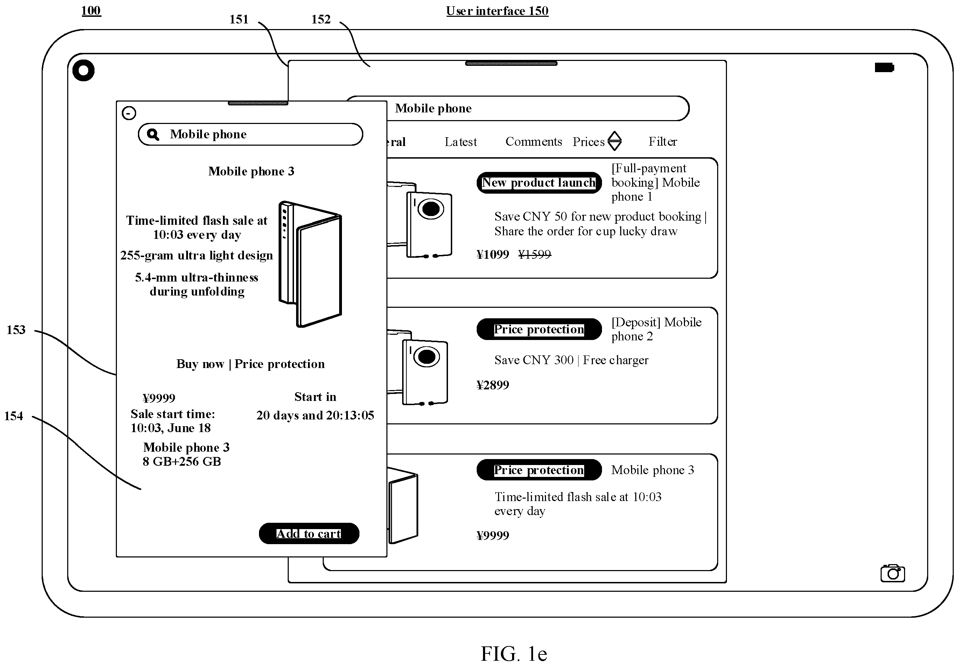

If the user first displays the auxiliary window in a floating window manner and then minimizes the auxiliary window (as shown in FIG. 1c), the electronic device 100 responds again to, tapping, by the user, a commodity link of another commodity on the commodity overview interface. In this case, the main window and a floating window of the auxiliary window are displayed again on the screen of the electronic device 100, and display content on the commodity information interface is refreshed in the auxiliary window (as shown in FIG. 1e). In this way, a display effect of originally arranging again the main window and the auxiliary window in parallel on the screen of the electronic device 100 simultaneously in the "app multiplier mode" and displaying a commodity information interface of the another commodity in the auxiliary window is changed to a display effect of popping up the floating window of the auxiliary window on the screen of the electronic device 100 and displaying the commodity information interface of the another commodity in the floating window of the auxiliary window. This affects user experience.

### SUMMARY

This application provides a content display method and an electronic device.

According to a first aspect, an embodiment of this application provides a content display method, applied to an electronic device. The electronic device includes a plurality of task stacks. The method includes:
the electronic device displays a first window, where the first window is used to display a first interface; and
displays a target interface in a second window in response to an operation of a user on the first interface, where the second window and the first window belong to a first task stack, the first task stack is one of the plurality of task stacks, and the second window is the same as or different from the first window.

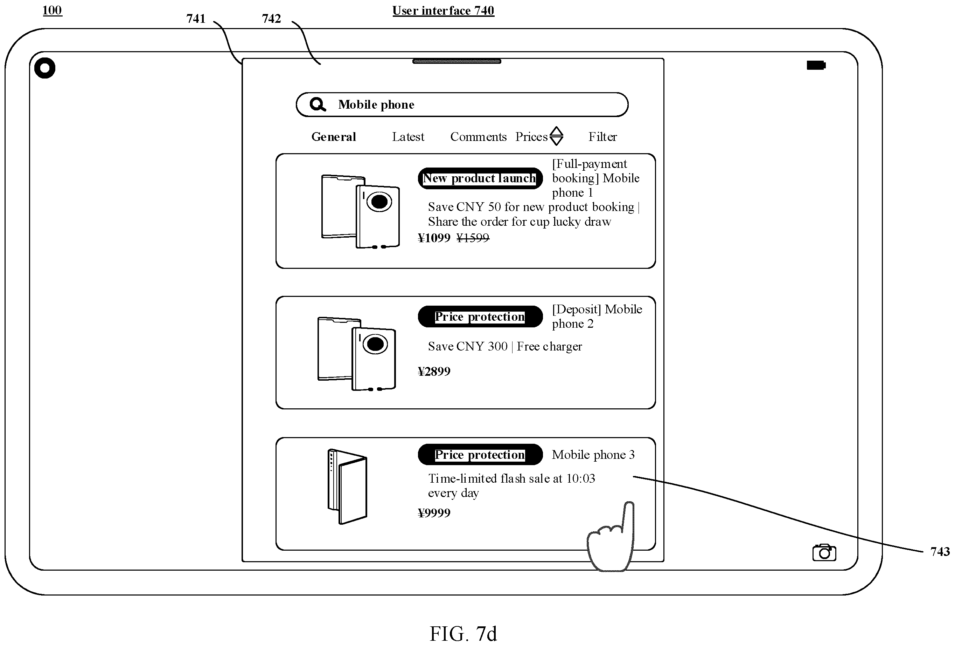

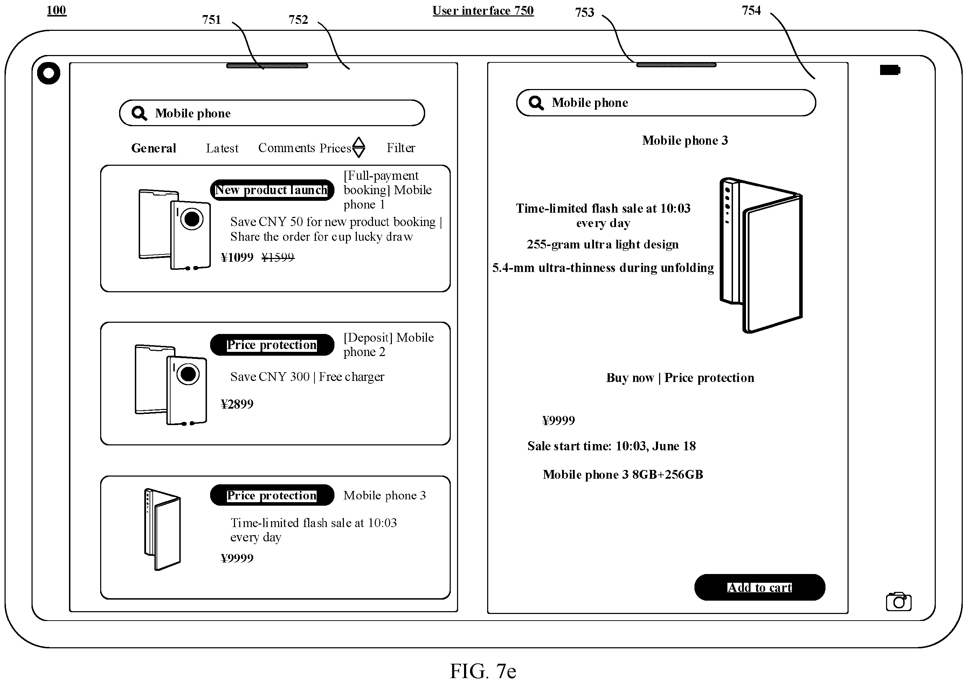

To be specific, in embodiments of this application, the electronic device herein may include a mobile phone, a tablet computer, and the like. The first window may be a window that is opened by the electronic device. The electronic device displays the first interface in the first window. The first interface herein may be a commodity overview interface of a shopping application shown in FIG. 7d. The operation on the first interface may include an operation performed by the user on a control on the first interface. Therefore, the first task stack corresponding to the first window in which the first interface is located may be referred to as a focus task stack. The target interface is displayed in the second window in response to the operation on the first interface. As shown in FIG. 7e, the second window herein may be a window newly created by the electronic device. The target interface herein may be a commodity details interface of the shopping application.

In a possible implementation of the first aspect, when the electronic device is in a state in which a preset display mode is enabled, the second window is different from the first window, and when the electronic device is in a state in which the preset display mode is disabled, the second window is the same as the first window.

To be specific, in embodiments of this application, the preset display mode herein may include an "app multiplier mode". When the "app multiplier mode" is enabled, the first window and the second window may be arranged in parallel for display. The first window and the second window display the first interface and the target interface respectively. When the "app multiplier mode" is disabled, the first window and the second window are a same window. In other words, the second window is switched from the first interface to the target interface for display.

In a possible implementation of the first aspect, a running mode of the target interface is a single-instance mode, and the plurality of task stacks and the target interface have a same preset parameter.

To be specific, in embodiments of this application, the preset parameter herein may be a taskAffinity attribute. Only one target interface can exist in the plurality of task stacks that have a same preset parameter. In other words, an instance of the target interface can exist only in one of the plurality of task stacks that have a same preset parameter.

In a possible implementation of the first aspect, the displaying a target interface in a second window includes:
searching the plurality of task stacks in response to the operation on the first interface; and
when finding that a second task stack includes the target interface, deleting the target interface from the second task stack, and creating the target interface in the first task stack, where the second task stack is a task stack that is in the plurality of task stacks and that is different from the first task stack.

To be specific, in embodiments of this application, in response to the operation on the first interface, the electronic device needs to determine whether the target interface already exists in the plurality of task stacks, that is, determine whether the target interface is opened but not closed. The electronic device traverses the first task stack and the second task stack that have the same preset parameter as the target interface, to search the first task stack and the second task stack for the target interface. If the second task stack includes the target interface, the electronic device may delete, from the second task stack, another interface arranged after the target interface, and delete the target interface at the same time. After determining that the second task stack is not the focus task stack, as shown in FIG. 7e, the electronic device skips the second task stack and returns to the first task stack, creates the instance of the target interface in the first task stack, and displays the target interface in the second window in the first task stack. In this case, when the "app multiplier mode" is enabled, the first window and the second window may be arranged in parallel for display, and the first window and the second window display the first interface and the target interface respectively.

According to the method in embodiments of this application, when the electronic device starts the target interface on a current interface (the first interface), if the running mode of the instance of the target interface is the single-instance mode, the electronic device traverses all task stacks that have the same preset parameter as the target interface, to determine whether the instance of the target interface already exists. If the instance of the target interface exists in a task stack corresponding to a window on the current interface, the target interface is directly displayed in the window on the current interface. If the instance of the target interface exists in another task stack, the instance of the target interface and all instances arranged after the instance of the target interface are deleted from the another task stack. Then a task stack corresponding to a window on the current interface is returned to, and the instance of the target interface is created in the task stack under a current operation for display. If the instance of the target interface does not exist in any one of the task stacks that have the same preset parameter as the target interface, a task stack corresponding to a window on the current interface is returned to, and the instance of the target interface is created for display.

According to the foregoing content display method of the electronic device, when the user attempts to continuously start user interfaces of an application at a location of a same window on the screen of the electronic device, it is ensured that the user interfaces can be sequentially displayed at the location of the window based on a starting sequence, and the user interfaces do not jump between a plurality of windows for display, so that continuity of display content presented in the window of the electronic device is ensured, and user experience is improved.

In a possible implementation of the first aspect, the deleting the target interface from the second task stack includes:
when a third window in the second task stack includes only the target interface, closing the third window.

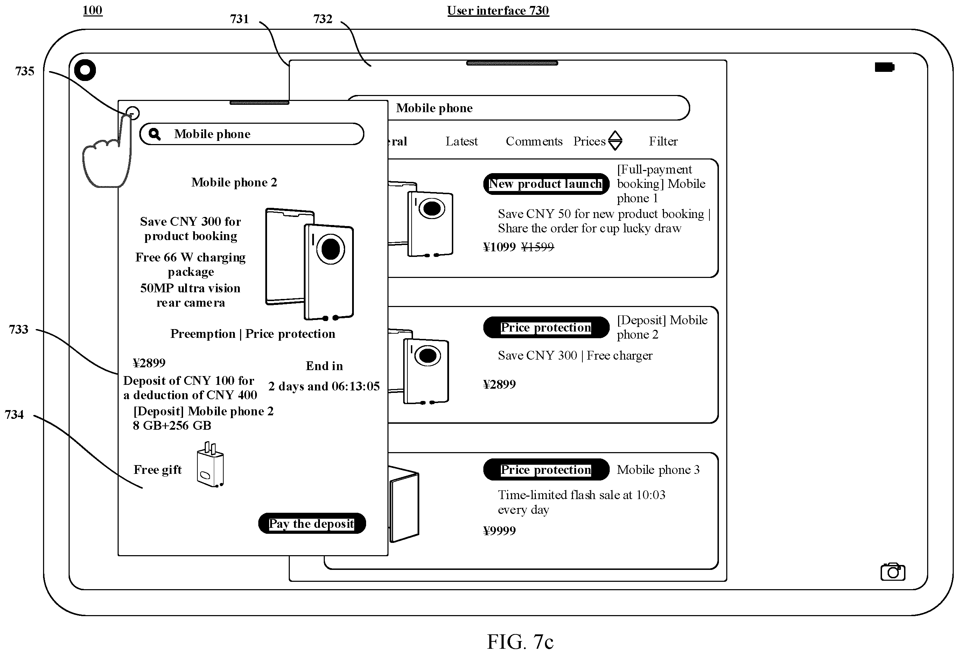

To be specific, in embodiments of this application, the third window herein may be the second window displayed in a floating window manner shown in FIG. 7c or the second window running in a minimization manner shown in FIG. 7c. If the third window in the second task stack includes only the target interface, that is, only the target interface is opened in the third window, after the target interface is deleted from the second task stack, another interface does not exist in the third window. Therefore, the third window is closed. In this case, if the third window is displayed in a floating window manner, the third window is closed on the screen of the electronic device.

In a first possible implementation of the first aspect, the method further includes:
when a second interface covering the target interface further exists in a third window in the second task stack, deleting the second interface simultaneously.

To be specific, in embodiments of this application, the second interface herein may be an interface that is in the third window and that is opened before the target interface. When the target interface is deleted, another interface that is in the second task stack and that is arranged after the target interface is deleted.

In a possible implementation of the first aspect, the third window is displayed in a floating window manner or is run in a minimization manner.

In a possible implementation of the first aspect, the displaying a target interface in a second window includes:
searching the plurality of task stacks in response to the operation on the first interface; and
when the target interface does not exist in the plurality of task stacks, creating the target interface in the first task stack.

To be specific, in embodiments of this application, if the target interface exists in neither the first task stack nor the second task stack that has the same preset parameter as the target interface, the electronic device skips the second task stack and returns to the first task stack, creates the target interface in the first task stack, and displays the target interface in the second window.

In a possible implementation of the first aspect, the displaying a target interface in a second window includes:
searching the plurality of task stacks in response to the operation on the first interface; and
when the first task stack includes the target interface, deleting a third interface covering the target interface.

To be specific, in embodiments of this application, if the target interface exists in the first task stack, another interface that is in the first task stack and that is arranged after the target interface is deleted, so that the target interface is located at a top of the first task stack, and the target interface is displayed.

In a possible implementation of the first aspect, when a running mode of the target interface is a multi-instance mode, the target interface is crested in the first task stack.

To be specific, in embodiments of this application, if the running mode of the target interface is the multi-instance mode, the instance of the target interface is directly created in a task stack corresponding to a target window, and the instance of the target interface is disposed at a top of the task stack, so that the target interface is displayed in the target window.

According to a second aspect, an embodiment of this application provides an electronic device, including:
a memory, configured to store instructions executed by one or more processors of the electronic device; and
a processor, which is one of the processors of the electronic device, and configured to perform the content display method according to the first aspect.

According to a third aspect, an embodiment of this application provides a computer program product, including a non-volatile computer-readable storage medium. The non-volatile computer-readable storage medium includes computer program code used to perform the content display method according to the first aspect.

### BRIEF DESCRIPTION OF DRAWINGS

FIG. 1a to FIG. 1e are diagrams of a group of user interfaces according to an embodiment of this application;
FIG. 2a to FIG. 2d are diagrams of running modes of a group of interfaces of an application according to an embodiment of this application;
FIG. 3a and FIG. 3b are diagrams of running modes of a group of interfaces of an application according to an embodiment of this application;
FIG. 4 is a diagram of a hardware structure of an electronic device according to an embodiment of this application;
FIG. 5 is a diagram of a software structure of an electronic device according to an embodiment of this application;
FIG. 6 is a schematic method flowchart of a content display method according to an embodiment of this application;
FIG. 7a to FIG. 7e are diagrams of a group of user interfaces according to an embodiment of this application;
FIG. 8 is a schematic method flowchart of a content display method according to an embodiment of this application;
FIG. 9 is a schematic interaction flowchart of a content display method according to an embodiment of this application; and
FIG. 10a to FIG. 10e are diagrams of a group of user interfaces according to an embodiment of this application.

### DESCRIPTION OF EMBODIMENTS

The technical solutions according to embodiments of this application are clearly and completely described in the following with reference to the accompanying drawings.

As described above, when a user taps a commodity overview interface of a shopping application to start a commodity information interface, a deviation occurs at a starting location of the commodity information interface. In other words, a window jump error occurs in a window corresponding to the commodity information interface. Specifically, with reference to FIG. 1a to FIG. 1e, FIG. 1a to FIG. 1e show examples in which an electronic device 100 displays, on a screen, a user interface including a shopping application. The electronic device 100 herein may be a tablet computer.

As shown in FIG. 1a, a user interface 110 is the screen of the electronic device 100. A first window 111 (a main window) is displayed on the user interface 110, and an interface 112 of the shopping application is displayed in the first window 111. Overview information of a plurality of found commodities belonging to a mobile phone type is displayed on the interface 112 of the shopping application. A control 113 is displayed on the interface 112 of the shopping application, and commodity information corresponding to a mobile phone "mobile phone 2" is displayed on the control 113.

In this case, the electronic device 100 is set to an "app multiplier mode". When the electronic device 100 receives, on the user interface 110 shown in FIG. 1a, an operation performed by a user on the control 113, the electronic device 100 displays, in response to the operation, a user interface 120 of the screen of the electronic device 100 shown in FIG. 1b. A first window 121 (a main window) and a second window 123 (an auxiliary window) are displayed on the user interface 120. An interface 122 of the shopping application (a first interface of the shopping application) is displayed in the first window 121, and an interface 124 of the shopping application (a second interface of the shopping application) is displayed in the second window 123. The first window 121 and the second window 123 are arranged in parallel for display. The commodity information corresponding to the "mobile phone 2" is displayed on the interface 124 of the shopping application.

When the electronic device 100 receives, on the user interface 120 shown in FIG. 1b, an operation performed by the user in the second window 123, for example, a tap operation or a touch and hold and drag operation performed on the second window 123, the electronic device 100 displays, in response to the operation, a user interface 130 of the screen of the electronic device 100 shown in FIG. 1c. A first window 131 and a second window 133 are displayed on the user interface 130, an interface 132 of the shopping application is displayed in the first window 131, and an interface 134 of the shopping application is displayed in the second window 133. The second window 133 is displayed in the first window 131 in a floating window manner. A "minimize" control 135 is displayed in the second window 133.

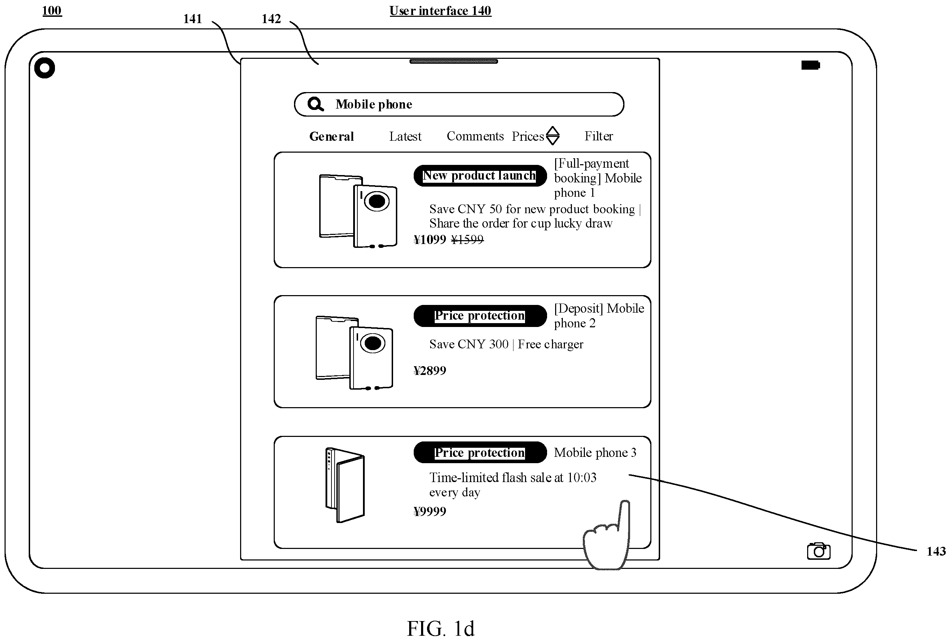

When the electronic device 100 receives, on the user interface 130 shown in FIG. 1c, an operation performed by the user on the control 135, the electronic device 100 displays, in response to the operation, a user interface 140 of the screen of the electronic device 100 shown in FIG. 1d. A first window 141 is displayed on the user interface 140, and an interface 142 of the shopping application is displayed in the first window 141. A control 143 is displayed on the interface 142 of the shopping application, and commodity information corresponding to a mobile phone "mobile phone 3" is displayed on the control 143.

In this case, the electronic device 100 is still in the "app multiplier mode". When the electronic device 100 receives, on the user interface 140 shown in FIG. 1d, an operation performed by the user on the control 143, the electronic device 100 displays, in response to the operation, a user interface 150 of the screen of the electronic device 100 shown in FIG. 1e. A first window 151 and a second window 153 are displayed on the user interface 150, an interface 152 of the shopping application is displayed in the first window 151, and an interface 154 of the shopping application is displayed in the second window 153. The second window 153 is displayed in the first window 151 in a floating window manner. The commodity information corresponding to the "mobile phone 3" is displayed on the interface 154 of the shopping application.

It may be understood that FIG. 1a to FIG. 1e merely show examples of the user interface 110, the user interface 120, the user interface 130, the user interface 140, and the user interface 150 of the screen of the electronic device 100, and should not constitute a limitation on this embodiment of this application.

It can be learned from a scenario shown in FIG. 1a to FIG. 1e that the user is browsing the first interface and the second interface (for example, the interface 122 and the interface 124 in FIG. 1b) of the shopping application at the same time through the main window and the auxiliary window (for example, the first window 121 and the second window 123 in FIG. 1b, or another quantity of windows). In this case, the main window and the auxiliary window are arranged in parallel on the screen of the electronic device. Then, the user sets the auxiliary window as a floating window and minimizes the auxiliary window, performs an operation on the first interface in the main window again, attempts to start, on the screen of the electronic device, another auxiliary window arranged in parallel to the main window, and displays, through the second interface in the auxiliary window, display content corresponding to the operation performed by the user. However, in this case, the auxiliary window displayed in a floating window manner pops up on the screen of the electronic device, and the display content corresponding to the operation performed by the user is displayed on the second interface in the pop-up auxiliary window, so that the auxiliary window that should be arranged on the screen of the electronic device in parallel to the main window for display is displayed in a floating window manner. In other words, the electronic device cannot create a new auxiliary window to display the second interface, but can find only the window in which the second interface already exists and reuse the window. Therefore, a floating window of the auxiliary window pops up on the screen of the electronic device.

In another embodiment of this application, the user may alternatively set only the auxiliary window as the floating window but not minimize the floating window. In this case, if the user performs an operation on the first interface in the main window again, display content corresponding to the operation performed by the user is displayed on the second interface in the auxiliary window that is displayed in a floating window manner on the screen of the electronic device.

It can be learned that in the scenario shown in FIG. 1a to FIG. 1e, on the screen of the electronic device, there is a problem that a display location of an interface of an application is deviated, that is, the displayed interface of the application appears in a window that is not expected by the user.

In embodiments of this application, the interface of the application may be represented by "activity", and the activity may alternatively be referred to as an instance of the interface of the application. The activity in embodiments of this application is a component of an Android application, and is used to manage an interface of the Android application. Generally, an Android application includes several interfaces, that is, several activities. Each activity is responsible for displaying one interface. For example, each of the interface 142 of the shopping application and the interface 154 of the shopping application in the scenario shown in FIG. 1a to FIG. 1e is an activity.

In embodiments of this application, a plurality of activities may be managed by a "task". The "task" is alternatively referred to as a task stack, and is used to manage an activity. One task stack may include a plurality of activities. The task stack may record a sequence of invoking or enabling the plurality of activities, and this is equivalent to recording a sequence of starting interfaces of an application. That one task stack may include a plurality of activities may be represented as that the task stack includes a plurality of instances of interfaces of an application, the task stack includes a plurality of interfaces of an application, a plurality of instances of interfaces of an application exist in the task stack, or a plurality of interfaces of an application exist in the task stack. In embodiments of this application, content described in the foregoing representation method is the same. This is not specifically limited.

In some embodiments of this application, one task stack may correspond to one or more windows on the screen of the electronic device. For example, one task stack corresponds to one window. This is equivalent to that one window may include a plurality of interfaces of an application, and the interfaces in the window may be arranged based on a sequence of starting the interfaces in the window.

In embodiments of this application, the interface 142 of the shopping application in the scenario shown in FIG. 1a to FIG. 1e may be referred to as a current interface, the interface 154 of the shopping application may be referred to as a target interface. The current interface herein may be an interface of the application on which the user performs an operation on the screen of the electronic device, and the target interface may be an interface that is of the application and that is displayed on the screen by the electronic device in response to an operation of the user.

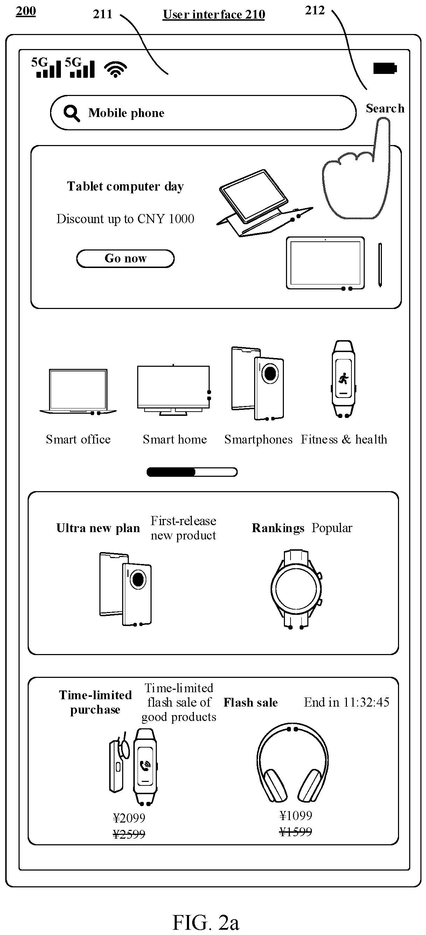

With reference to FIG. 2a to FIG. 2d, FIG. 2a to FIG. 2d show example diagrams in which an electronic device 200 displays, on a screen, an interface including a shopping application, a task stack corresponding to the interface of the shopping application, and a running mode of an activity (an instance of the interface of the shopping application). The electronic device 200 herein may be a mobile phone.

As shown in FIG. 2a, a user interface 210 is the screen of the electronic device 200. An interface 211 of the shopping application is displayed on the user interface 210. A search bar, a "search" control 212, a plurality of pieces of shopping information, and the like are displayed on the interface 211 of the shopping application.

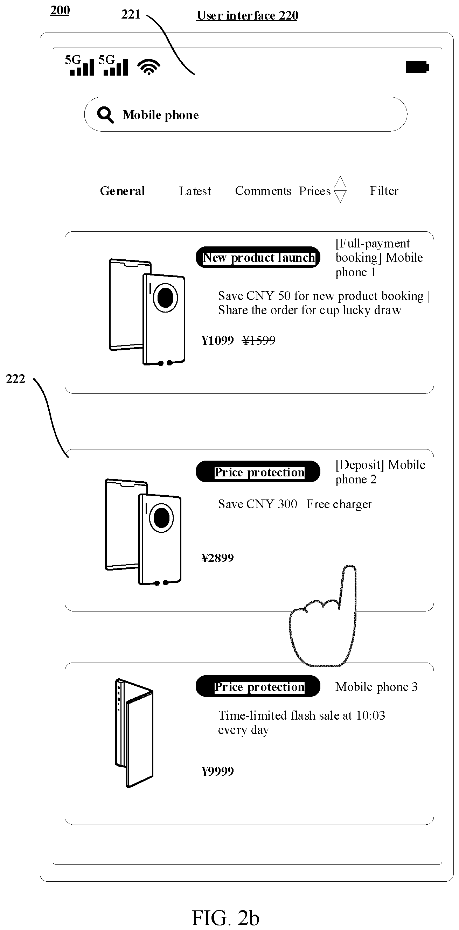

When the electronic device 200 receives, on the user interface 210 shown in FIG. 2a, an operation that a user enters "mobile phone" in the search bar on the interface 211 of the shopping application and performs on the "search" control 212, the electronic device 200 displays, in response to the operation, a user interface 220 of the screen of the electronic device 200 shown in FIG. 2b. An interface 221 of the shopping application is displayed on the user interface 220. Overview information of a plurality of found commodities belonging to the mobile phone type and a control 222 are displayed on the interface 221 of the shopping application. Commodity information corresponding to a mobile phone "mobile phone 2" is displayed on the control 222.

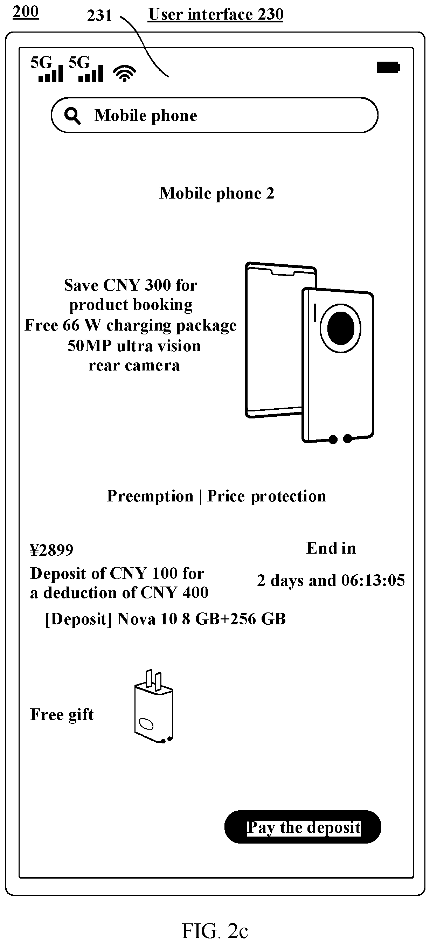

When the electronic device 200 receives, on the user interface 220 shown in FIG. 2b, an operation performed by the user on the control 222, the electronic device 200 displays, in response to the operation, a user interface 230 of the screen of the electronic device 200 shown in FIG. 2c. An interface 231 of the shopping application is displayed on the user interface 230. The commodity information corresponding to the mobile phone "mobile phone 2" is displayed on the interface 231 of the shopping application.

It may be understood that the interface 211 of the shopping application, the interface 221 of the shopping application, and the interface 231 of the shopping application may be represented by an activity A, an activity B, and an activity C respectively.

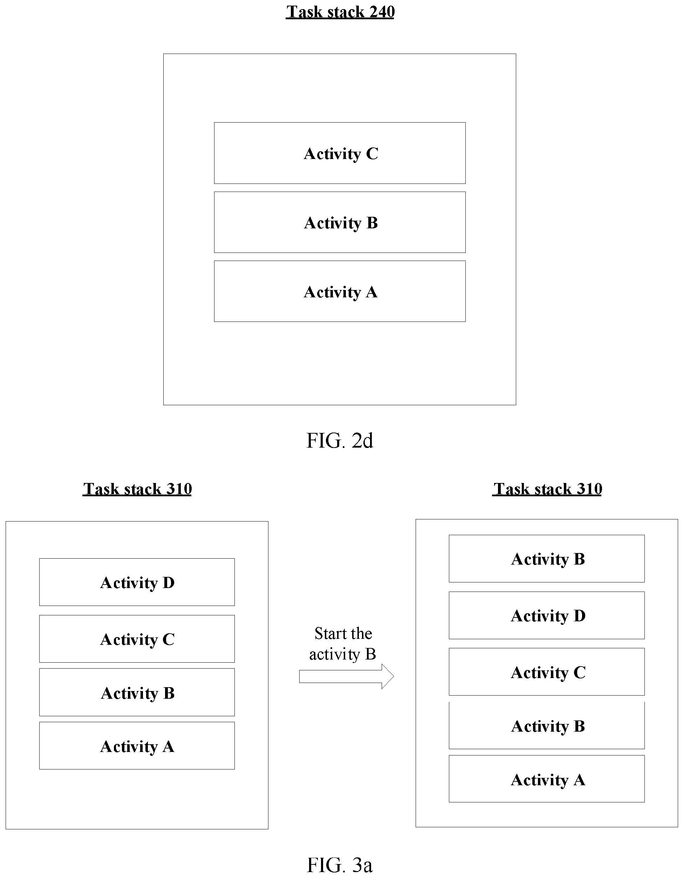

FIG. 2d is a diagram of a task stack 240 used to manage the interface 211 of the shopping application, the interface 221 of the shopping application, and the interface 231 of the shopping application. As shown in FIG. 2d, the activity A, the activity B, and the activity C in the task stack 240 are arranged in a bottom-up order, and this indicates a sequence of invoking or enabling the activity A, the activity B, and the activity C. In other words, the electronic device 200 sequentially enables the activity A, the activity B, and the activity C.

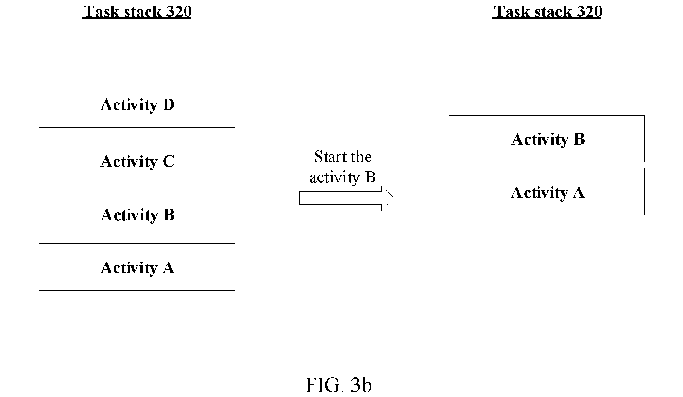

The following continues to describe the task stack and the running modes of the activity in embodiments of this application based on FIG. 3a and FIG. 3b. In some embodiments of this application, the activity in the task stack may include a plurality of running modes, for example, a standard mode, a single top mode, a single task mode, and a single instance mode. The standard mode and the single top mode may mean that an activity supports a plurality of instances. In other words, an interface of an application supports a plurality of instances. The single task mode and the single instance mode may mean that an activity supports a single instance. In other words, an interface of an application supports a single instance.

It may be understood that, as shown in FIG. 3a, a task stack 310 may correspond to a window on a screen of an electronic device. In the standard mode, an activity A, an activity B, an activity C, and an activity D are sequentially enabled in the task stack 310. When the activity B needs to be enabled again, an activity B is created at a top of the task stack 310, so that an interface of an application corresponding to the activity B is displayed in the window corresponding to the task stack 310 on the screen of the electronic device. For example, the activity D herein may be a first interface of the application, and the activity B herein may be a second interface of the application. If the second interface needs to be run in the task stack 310, that is, the second interface is started from the first interface, a new activity B of the second interface is directly created in the task stack corresponding to the window on the first interface. In other words, an instance of a new second interface is created. The activity B of the second interface may be located at the top of the task stack 310, that is, at the top of another interface in the task stack. In the single top mode, an example in which the activity D may be a first interface of the application and the activity B may be a second interface of the application is still used. If the first interface needs to be started again in the task stack 310, that is, a first interface is started again in the first interface of the application, when an instance of the first interface that needs to be run already exists at the top of the task stack corresponding to the window on the first interface, the instance of the first interface is directly reused. When the second interface needs to be started in the task stack 310, an instance of the second interface needs to be created at the top of the task stack corresponding to the window on the first interface.

For the single task mode, as shown in FIG. 3b, in the single task mode, an activity A, an activity B, an activity C, and an activity D are sequentially enabled in the task stack 320. In this case, when the activity B needs to be enabled again, all activities arranged after the activity B in the task stack 320 are deleted, so that the activity B is located at the top of the task stack 320, and an interface of an application corresponding to the activity B is displayed in a window corresponding to the task stack 320. It may be understood that the task stack 320 is a first-in-last-out data structure. Therefore, an instance of an interface of an application that is started later is located in an upper part of the task stack 320.

In embodiments of this application, an example in which the activity D may be a first interface of the application and the activity B may be a second interface of the application is still used. If the instance of the second interface is located in the task stack of the window on the first interface, an instance that is of another interface and that is arranged after the instance of the second interface is deleted, so that the instance of the second interface is located at the top of the task stack to display the second interface. If the instance of the second interface is located in a task stack of another window, an instance that is of another interface and that is arranged after the instance of the second interface is deleted from the task stack, so that the instance of the second interface is located at the top of the task stack, and the window corresponding to the task stack is jumped to, to display the second interface.

It can be learned that the electronic device needs to traverse all task stacks (including the task stack of the window on the first interface) that have a same taskAffinity attribute (which may alternatively be referred to as a preset parameter) as the instance of the second interface, to search for the instance of the second interface, for example, traverse, starting from the task stack of the window on the first interface, all task stacks that have a same taskAffinity attribute as the instance of the second interface, or traverse, starting from another task stack, all task stacks that have a same taskAffinity attribute as the instance of the second interface and that include the task stack of the window on the first interface. If the electronic device does not find the instance of the second interface after traversing to a last task stack, that is, the instance of the second interface does not exist in the task stack of the window corresponding to the first interface and another task stack that has a same taskAffinity attribute as the instance of the second interface, the instance of the second interface is created in the last task stack, and the window corresponding to the task stack is jumped to, to display the second interface. It can be learned that the second interface is displayed in a window of a task stack different from the task stack of the window on the first interface.

For the single instance mode, only one instance of an interface of an application is allowed in this mode. When the instance of the interface of the application is created for the first time, a new task stack is created, and the instance is added to the task stack. In addition, the task stack can contain only the instance, and an instance of an interface of another application cannot be added. If the instance already exists in the task stack, a window corresponding to the task stack is directly jumped to, that is, the window corresponding to the task stack is displayed, where the window includes the interface of the application.

To resolve the problems that occur in the scenario shown in FIG. 1a to FIG. 1c, an embodiment of this application provides a content display method of an electronic device. According to the method, an interface of an application may appear in a window expected by a user based on a starting mode of the interface of the application and a taskAffinity attribute between a task stack and the interface of the application. This can ensure location continuity of display content presented in a window on a screen of the electronic device. The content display method includes: When the electronic device starts a target interface from a current interface, the electronic device determines whether a running mode of an instance of the target interface is a single-instance mode or a multi-instance mode. If the running mode of the instance of the target interface is the multi-instance mode, the instance of the target interface is directly created in a task stack corresponding to the current interface, and the instance of the target interface is set at a top of the task stack, to display the target interface. If the running mode of the instance of the target interface is the single-instance mode, the electronic device traverses all task stacks that have the same taskAffinity attribute as the target interface, to determine whether the instance of the target interface already exists. If the instance of the target interface exists in a task stack corresponding to a window on the current interface, the target interface is directly displayed in the window on the current interface.

If the instance of the target interface exists in another task stack, the instance of the target interface and all instances arranged after the instance of the target interface are deleted from the another task stack. Then a task stack corresponding to a window on the current interface is returned to, and the instance of the target interface is created in the task stack under a current operation for display.

If the instance of the target interface does not exist in any one of the task stacks that have the same taskAffinity attribute as the target interface, a task stack corresponding to a window on the current interface is returned to, and the instance of the target interface is created for display.

According to the foregoing content display method of the electronic device, when the user attempts to continuously start user interfaces of an application at a location of a same window on the screen of the electronic device, it is ensured that the user interfaces can be sequentially displayed at the location of the window based on a starting sequence, and the user interfaces do not jump between a plurality of windows for display, so that continuity of display content presented in the window of the electronic device is ensured, and user experience is improved.

To describe the prompting method provided in embodiments of this application more clearly and in detail, the following first describes an electronic device 100 used to implement the method provided in embodiments of this application. The electronic device 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another device having a display. A specific type of the electronic device is not limited in embodiments of this application.

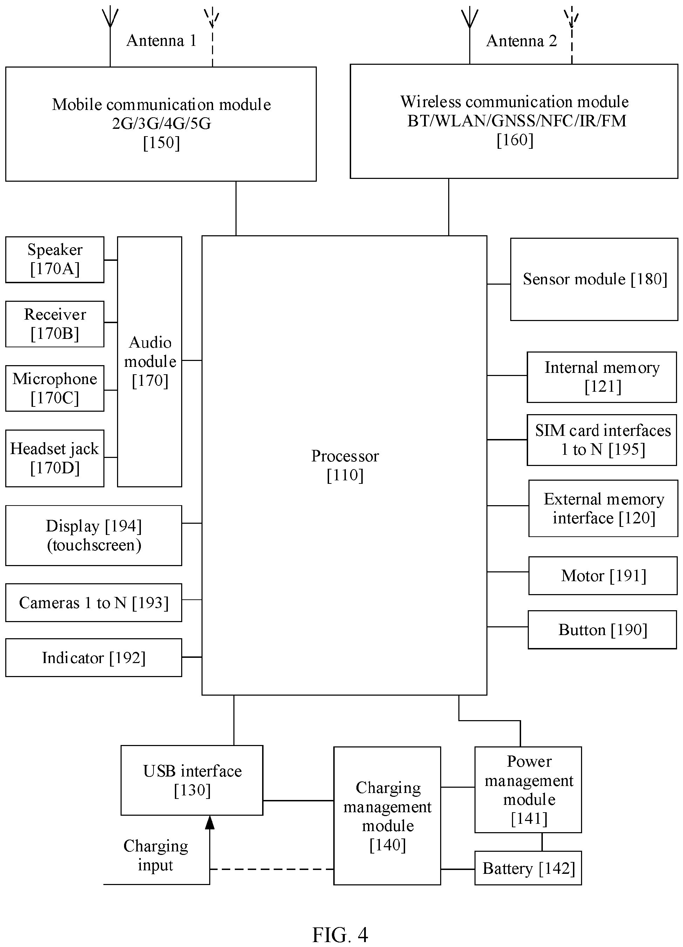

FIG. 4 is a diagram of a structure of an electronic device 100 according to an embodiment of this application. As shown in FIG. 4, the electronic device (for example, a mobile phone) may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and the like.

It may be understood that the structure illustrated in this embodiment does not constitute a specific limitation on the electronic device. In some other embodiments of this application, the electronic device may include more or fewer components than those shown in the figure, a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment is merely an example for description, and does not constitute a limitation on a structure of the electronic device. In some other embodiments of this application, the electronic device may alternatively use an interface connection manner different from that in the foregoing embodiment, or use a combination of a plurality of interface connection manners.

The electronic device may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel.

The electronic device may implement a photographing function through the ISP, the camera 193, the video codec, the GPU, the display 194, the application processor, and the like. The ISP is configured to process data fed back by the camera 193. The camera 193 is configured to capture a static image or a video. In some embodiments, the electronic device may include one or N cameras 193, where N is a positive integer greater than 1.

The external memory interface 120 may be configured to connect to an external memory card, such as a micro SD card, to extend a storage capability of the electronic device. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device and data processing. For example, in this embodiment of this application, the processor 110 may execute the instructions stored in the internal memory 121, and the internal memory 121 may include a program storage area and a data storage area.

The program storage area may store an operating system, an application required by at least one function (for example, a voice playing function or an image playing function), and the like. The data storage area may store data (such as audio data and a phone book) created when the electronic device is used, and the like. In addition, the internal memory 121 may include a highspeed random access memory, or may include a nonvolatile memory, for example, at least one magnetic disk storage device, a flash memory, or a universal flash storage (universal flash storage, UFS).

It may be understood that the structure illustrated in this embodiment of this application does not constitute a specific limitation on the electronic device. In some other embodiments of this application, the electronic device may include more or fewer components than those shown in the figure, a combination of some components, or splits from some components, or a different component layout. The components shown in the figure may be implemented by using hardware, software, or a combination of software and hardware.

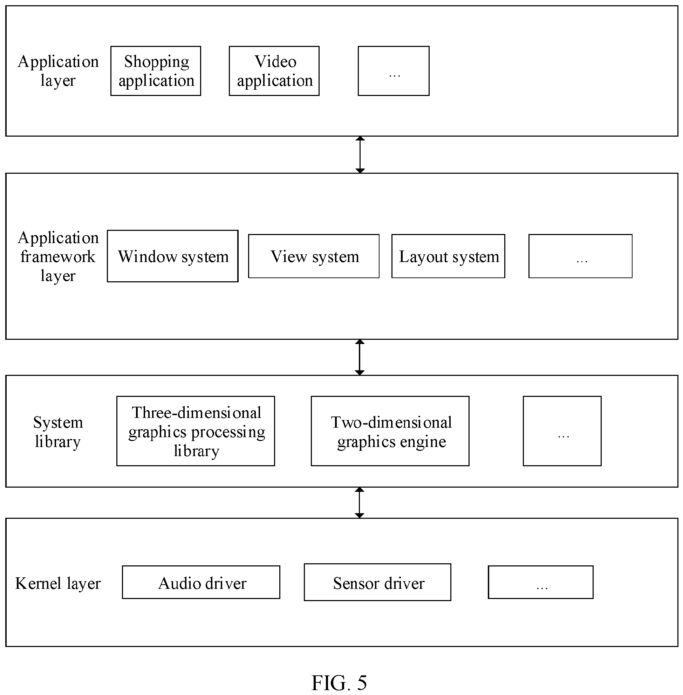

FIG. 5 is a block diagram of a software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 5, the application layer may include an application such as a shopping application or a video.

The application framework layer may include a window system, a layout system, and a view system. The window system may be used to manage an opened window (including a window displayed on a screen of the electronic device 100 and a window running in a background) of the electronic device 100. The layout system and the view system can be used to manage a running mode of an instance of a user interface in the window.

In some embodiments of this application, a user may set an application, and the electronic device generates an event based on an application package in response to the setting of the user.

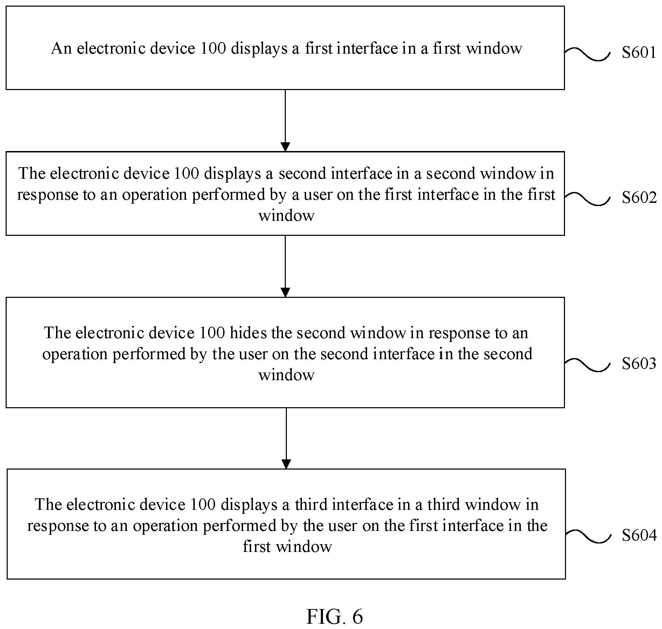

The following describes in detail, based on a schematic method flowchart shown in FIG. 6, a content display method provided in an embodiment of this application. The method shown in FIG. 6 may be implemented by a processor of an electronic device 100 by executing related instructions. The electronic device 100 herein may be a tablet computer.

With reference to FIG. 6, the content display method may include the following steps.

S601: The electronic device 100 displays a first interface in a first window.

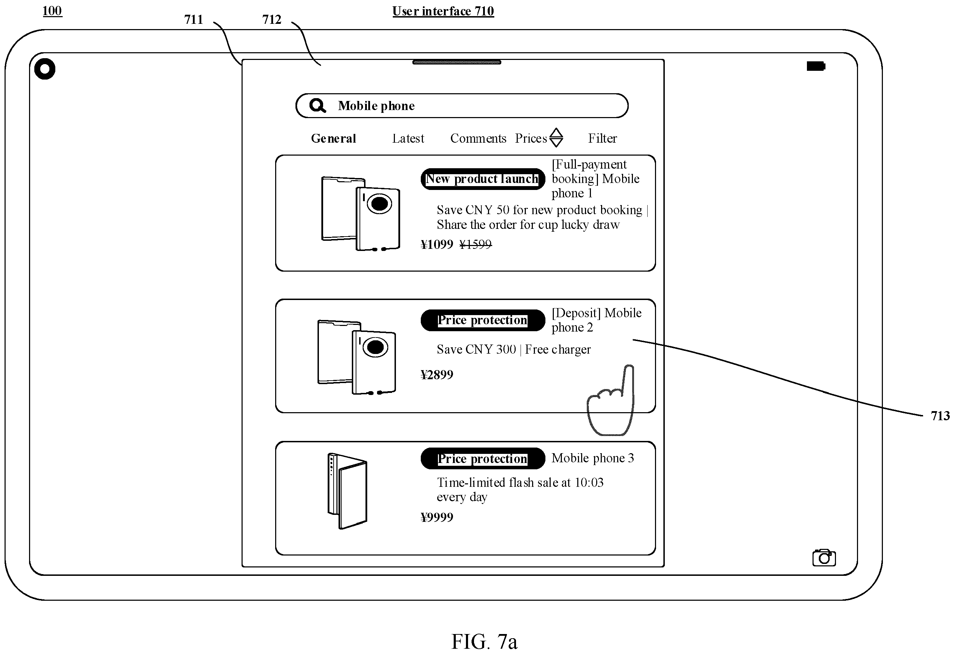

With reference to FIG. 7a to FIG. 7e, FIG. 7a to FIG. 7e show examples in which the electronic device 100 displays, on a screen, user interfaces including a shopping application.

As shown in FIG. 7a, a user interface 710 is the screen of the electronic device 100. A first window 711 (a main window) is displayed on the user interface 710, and an interface 712 of the shopping application is displayed in the first window 711. Overview information of a plurality of found commodities belonging to a mobile phone type is displayed on the interface 712 of the shopping application. A control 713 is displayed on the interface 712 of the shopping application, and commodity information corresponding to a mobile phone "mobile phone 2" is displayed on the control 713.

In some embodiments of this application, herein, the first window may be the first window 711, and the first interface may be the interface 712 of the shopping application, namely, a commodity overview interface of the shopping application.

S602: The electronic device 100 displays a second interface in a second window in response to an operation performed by a user on the first interface in the first window.

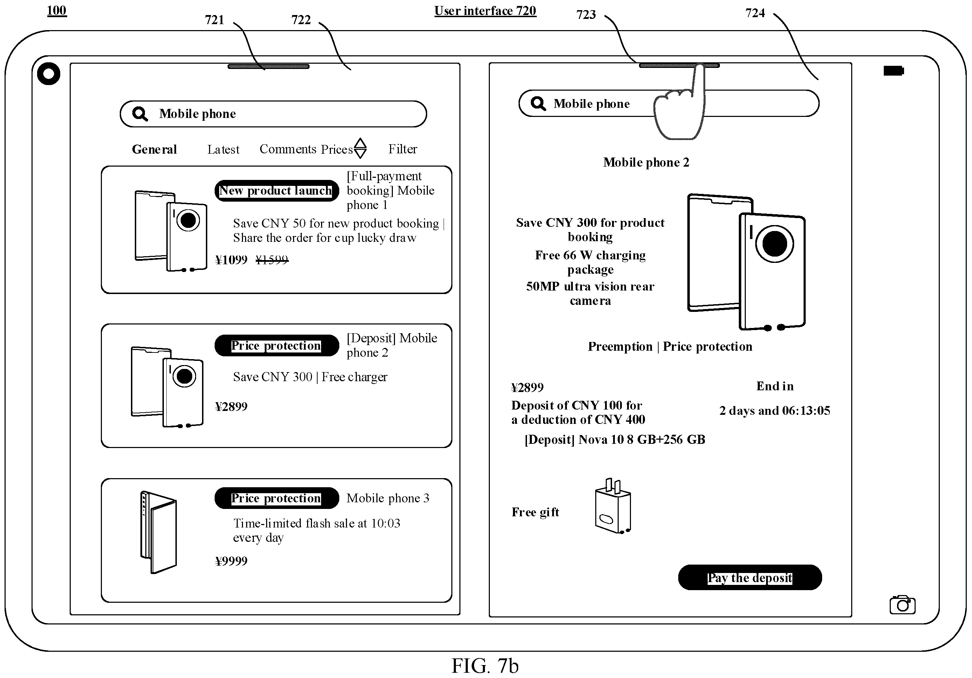

In this case, the electronic device 100 is set to an "app multiplier mode". When the electronic device 100 receives, on the user interface 110 shown in FIG. 7a, an operation performed by the user on the control 713, the electronic device 100 displays, in response to the operation, a user interface 720 of the screen of the electronic device 100 shown in FIG. 7b. A first window 721 (the main window) and a second window 723 (an auxiliary window) are displayed on the user interface 720, an interface 722 of the shopping application is displayed in the first window 721, and an interface 724 of the shopping application is displayed in the second window 723. The first window 721 and the second window 723 are arranged in parallel for display. The commodity information corresponding to the "Mobile phone 2" is displayed on the interface 724 of the shopping application.

In some embodiments of this application, herein, the first window may be the first window 721, the second window may be the second window 723, and the first interface and the second interface may be interfaces of the shopping application installed on the electronic device 100, namely, the interface 722 of the shopping application and the interface 724 of the shopping application, namely, the commodity overview interface and a commodity details interface of the shopping application.

When the electronic device 100 receives, on the user interface 720 shown in FIG. 7b, an operation performed by the user on an upper side of the second window 723, for example, a tap operation or a touch and hold and drag operation performed on the second window 723, the electronic device 100 displays, in response to the operation, a user interface 730 of the screen of the electronic device 100 shown in FIG. 7c. A first window 731 and a second window 733 are displayed on the user interface 730, an interface 732 of the shopping application is displayed in the first window 731, and an interface 734 of the shopping application is displayed in the second window 733. The second window 733 is displayed in the first window 731 in a floating window manner. A "minimize" control 735 is displayed in the second window 733.

S603: The electronic device 100 hides the second window in response to an operation performed by the user on the second interface in the second window.

When the electronic device 100 receives, on the user interface 730 shown in FIG. 7c, an operation performed by the user on the control 735, the electronic device 100 displays, in response to the operation, the second window 733 in the floating window manner to implement minimization. In this case, the electronic device 100 displays a user interface 740 of the screen of the electronic device 100 shown in FIG. 7d. A first window 741 is displayed on the user interface 740, and an interface 742 of the shopping application is displayed in the first window 741. A control 743 is displayed on the interface 742 of the shopping application, and commodity information corresponding to a mobile phone "mobile phone 3" is displayed on the control 743.

It may be understood that, in this case, the second window 733 in FIG. 7c is minimized for display or is run in a background.

S604: The electronic device 100 displays a third interface in a third window in response to an operation performed by the user on the first interface in the first window.

In this case, the electronic device 100 is still in the "app multiplier mode". When the electronic device 100 receives, on the user interface 740 shown in FIG. 7d, an operation performed by the user on the control 743, the electronic device 100 displays, in response to the operation, a user interface 750 of the screen of the electronic device 100 shown in FIG. 7e. A first window 751 and a second window 753 are displayed on the user interface 750, an interface 752 of the shopping application is displayed in the first window 751, and an interface 754 of the shopping application is displayed in the second window 753. The second window 753 and the first window 751 are arranged in parallel for display. The commodity information corresponding to the "Mobile phone 3" is displayed on the interface 754 of the shopping application.

In some embodiments of this application, herein, the first window may be the first window 751, the third window may be the second window 753, and the third interface may be the interface 754 of the shopping application. In other words, the third interface and the second interface are a same interface of the shopping application.

It may be understood that, if the second window 733 shown in FIG. 7c includes only the interface 734 of the shopping application, that is, an instance of the interface 734 of the shopping application exists only in a task stack corresponding to the second window 733, the second window 733 is closed when the electronic device 100 displays the user interface 750 of the screen of the electronic device 100 shown in FIG. 7e.

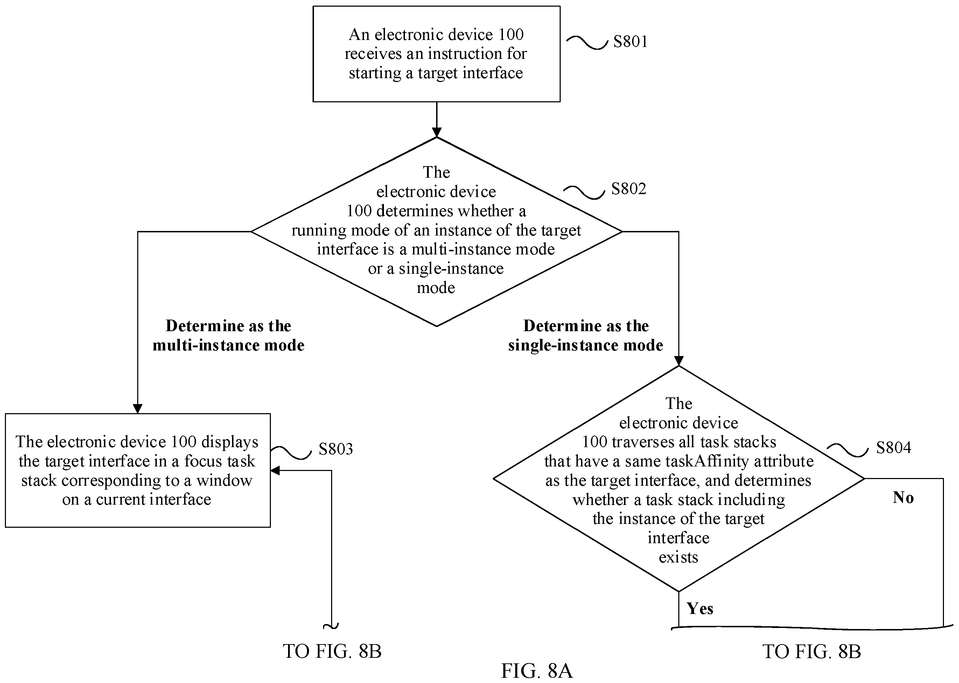

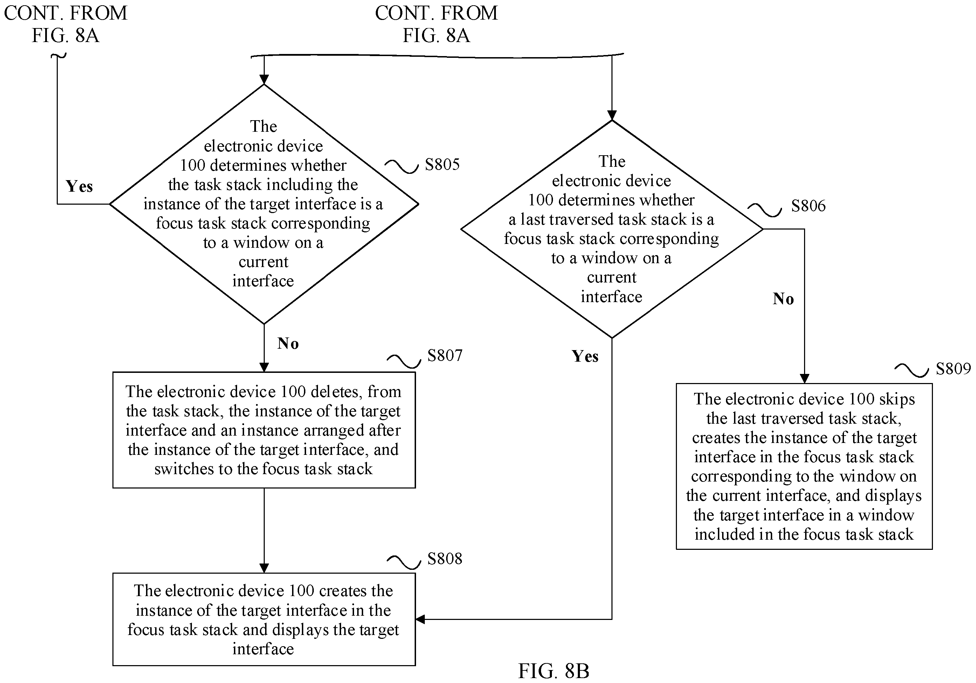

In this embodiment of this application, the interface 742 of the shopping application shown in FIG. 7d may be referred to as a current interface, and the interface 754 of the shopping application shown in FIG. 7e may be referred to as a target interface. As shown in FIG. 7d, when the electronic device 100 receives, on the user interface 740, an operation performed by the user on the control 743, namely, starting the target interface from the current interface, the electronic device 100 may determine, based on a schematic flowchart of a content display method shown in FIG. 8, a location of the interface 754 of the shopping application on the user interface 750 shown in FIG. 7e, namely, a location of the second window 753 corresponding to the interface 754 of the shopping application.

Specifically, the content display method shown in FIG. 8 may be implemented by a processor of an electronic device 100 by executing related instructions.

With reference to FIG. 8, the content display method may include the following steps.

S801: The electronic device 100 receives an instruction for starting a target interface.

In this embodiment of this application, the instruction for starting the target interface herein may be generated based on an operation that can be received by the electronic device 100 and that is performed by a user on a current interface.

S802: The electronic device 100 determines whether a running mode of an instance of the target interface is a multi-instance mode or a single-instance mode.

In this embodiment of this application, the running mode herein may include a standard mode, a single top mode, a single task mode, and a single instance mode. In other words, it is determined which one of the foregoing running modes is the running mode of the instance of the target interface.

In this embodiment of this application, if the running mode of the instance of the target interface is the multi-instance mode, step S803 is performed, to directly create the instance of the target interface in a focus task stack corresponding to a window on a current interface, and set the instance of the target interface at a top of the focus task stack, so that the target interface is displayed in the window on the current interface. If the running mode of the instance of the target interface supports the single-instance mode, step S804 is performed. The electronic device 100 further determines whether the instance of the target interface exists in all task stacks that have a same taskAffinity attribute as the instance of the target interface.

S803: The electronic device 100 displays the target interface in the focus task stack corresponding to the window on the current interface.

In this embodiment of this application, if the running mode of the instance of the target interface is the standard mode, the instance of the target interface is directly created in the focus task stack corresponding to the window on the current interface, and the instance of the target interface is set at the top of the focus task stack, so that the target interface is displayed in the window on the current interface. If the running mode of the instance on the target interface is the single task mode, and the instance of the target interface exists in the focus task stack corresponding to the window on the current interface, an instance that is of another interface and that is arranged after the instance of the target interface is deleted from the focus task stack corresponding to the window on the current interface, so that the instance of the target interface is located at the top of the focus task stack, to display the target interface.

It may be understood that the electronic device 100 may display the target interface in the window on the current interface, or may display the target interface in another window in a same task stack corresponding to the window on the current interface, that is, display the target interface in a window that is in the focus task stack and that is different from the window on the current interface.

S804: The electronic device 100 traverses all task stacks that have a same taskAffinity attribute as the target interface, and determines whether a task stack including the instance of the target interface exists.

In this step, the electronic device 100 may traverse all task stacks (including a task stack corresponding to a window displayed on a screen of the electronic device and a task stack corresponding to a window running in a background) that have a same task Affinity attribute as the target interface, to determine whether the instance of the target interface already exists. In other words, the electronic device 100 determines whether the task stack including the instance of the target interface exists. The electronic device 100 may set a name for an interface of each application as a unique identifier of the interface. The electronic device 100 may search, based on a name of the target interface, whether an interface whose name is the same as the name of the target interface exists in the task stack, to determine whether the instance of the target interface already exists.

In this embodiment of this application, if the task stack includes the instance of the target interface, step S805 is performed. The electronic device 100 determines whether the task stack is the focus task stack corresponding to the window on the current interface. If the instance of the target interface does not exist in the task stack, step S806 is performed, to determine whether a last traversed task stack is the focus task stack corresponding to the window on the current interface. It is further ensured that when there is no instance of the target interface in all task stacks that have the same taskAffinity attribute as the target interface, the instance of the target interface is finally created in the focus task stack corresponding to the window on the current interface. In other words, it is ensured that the target interface is jumped to in the window on the current interface for display.

S805: The electronic device 100 determines whether the task stack including the instance of the target interface is a focus task stack corresponding to a window on a current interface.

In this embodiment of this application, the focus task stack herein indicates a task stack corresponding to a window that is on the screen of the electronic device 100 and on which the user is performing an operation. If the task stack including the instance of the target interface is the focus task stack corresponding to the window on the current interface, step S803 is performed, to directly display the target interface in the window on the current interface. If the task stack including the instance of the target interface is not the focus task stack corresponding to the window on the current interface, step S807 is performed, to delete, from the task stack, the instance of the target interface and the instance that is of the another interface and that is arranged after the instance of the target interface, skip the task stack, and switch to the focus task stack. This further ensures that, when there is no instance of the target interface in all task stacks that have the same taskAffinity attribute as the target interface, the instance of the target interface is finally created in the focus task stack corresponding to the window on the current interface. In other words, it is ensured that the target interface is jumped to in the window on the current interface for display.

S806: The electronic device 100 determines whether the last traversed task stack is a focus task stack corresponding to a window on a current interface.

In this embodiment of this application, if the last traversed task stack is the focus task stack corresponding to the window on the current interface, step S808 is performed, to create the instance of the target interface in the focus task stack corresponding to the window on the current interface. If the last traversed task stack is not the focus task stack corresponding to the window on the current interface, step S809 is performed, to skip the last traversed task stack, return to the focus task stack corresponding to the window on the current interface, and create the instance of the target interface in the focus task stack.

S807: The electronic device 100 deletes, from the task stack, the instance of the target interface and the instance arranged after the instance of the target interface, and switches to the focus task stack.

In this embodiment of this application, the electronic device 100 deletes, from the task stack, the instance that is of the another interface and that is arranged after the instance of the target interface, and also deletes the instance of the target interface.

S808: The electronic device 100 creates the instance of the target interface in the focus task stack and displays the target interface.

In this embodiment of this application, after switching to the focus task stack corresponding to the window on the current interface, the electronic device 100 may create the instance of the target interface in the focus task stack, and set the instance of the target interface at the top of the task stack, so that the target interface is displayed in the window on the current interface.

S809: The electronic device 100 skips the last traversed task stack, creates the instance of the target interface in the focus task stack corresponding to the window on the current interface, and displays the target interface in a window included in the focus task stack.

In this embodiment of this application, after the electronic device 100 skips the last traversed task stack and returns to the focus task stack corresponding to the window on the current interface, the electronic device 100 may directly create the instance of the target interface in the focus task stack corresponding to the window on the current interface in a manner similar to that in step S808, to ensure that the window on the current interface jumps to the target interface for display.

It may be understood that the target interface herein and the current interface may be in a same window. In other words, the target interface covers the current interface for display in the window of the current interface. The target interface and the current interface may be in different windows of the focus task stack.

The following describes, based on FIG. 7a to FIG. 7e, the process of the content display method shown in FIG. 8. The "app multiplier mode" is set on the electronic device 100. The first window and the second window in FIG. 7b belong to a same task stack, that is, a first task stack. In other words, the first interface in the first window and the second interface in the second window belong to the first task stack. In FIG. 7c, when the second window is displayed in the first window in a floating window manner, the first window and the second window belong to different task stacks. In other words, the first window belongs to a first task stack, and the second window belongs to a second task stack. In other words, the first interface in the first window and the second interface in the second window belong to the first task stack and the second task stack respectively, and the first interface displayed in the first window is referred to as the current interface. As shown in FIG. 7d, when the user performs an operation on the first interface in the first window, to attempt to open the third interface, the third interface herein is referred to as the target interface, and the third interface and the second interface are same interfaces. In this case, the electronic device determines whether the running mode of the third interface is the single-instance mode or the multi-instance mode. If the running mode of the third interface is the multi-instance mode, and the electronic device keeps the "app multiplier mode" enabled, the electronic device creates the third window, and displays the third interface in the third window. Herein, the third window and the first window are different windows, and the third window and the second window belong to the first task stack. If the running mode of the third interface is the single-instance mode, the electronic device traverses a task stack that has a same task Affinity attribute as the third interface, to search the task stack for an instance of the third interface. The electronic device may first search the first task stack, where the first task stack herein is a task stack in which the current interface is located, and may alternatively be referred to as the focus task stack. If the instance of the third interface exists in the first task stack, an instance that is of another interface and that is arranged after the instance of the third interface is deleted from the first task stack, so that the instance of the third interface is located at the top of the first task stack, to display the target interface. If the instance of the third interface does not exist in the first task stack, the electronic device may search the second task stack, and after finding the instance of the third interface in the second task stack, the electronic device may delete the instance that is of the another interface and that is arranged after the instance of the third interface in the second task stack, and further deletes the instance of the third interface. After determining that the second task stack is not the focus task stack, as shown in FIG. 7e, the electronic device skips the second task stack and returns to the first task stack, creates the instance of the third interface in the first task stack, and displays the third interface in the third window.

It may be understood that, if the instance of the third interface does not exist in the second task stack, that is, the instance of the third interface does not exist in all task stacks that have a same taskAffinity attribute as the third interface, the electronic device also skips the second task stack, returns to the first task stack, creates the instance of the third interface in the first task stack, and displays the third interface in the third window. If the electronic device disables the "app multiplier mode" when the user performs an operation on the first interface in the first window, the electronic device displays the third interface in the first window after traversing the first task stack and the second task stack.

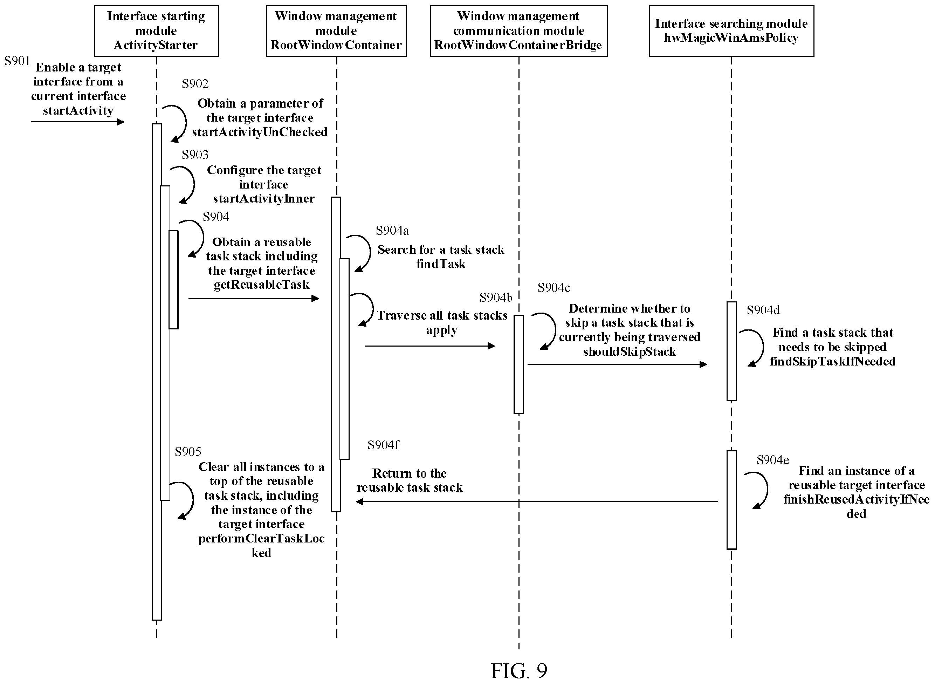

With reference to FIG. 9, FIG. 9 is an interaction flowchart of a content display method of an electronic device. An interaction procedure shown in FIG. 9 may be implemented by running a corresponding program in the window system, the layout system, and the view system at the application framework layer of the electronic device 100 shown in FIG. 5. It may be understood that an interface starting module, a window management module, a window management communication module, and an interface searching module shown in FIG. 9 may be virtual modules disposed in the window system, the layout system, and the view system at the application framework layer of the electronic device 100.

With reference to FIG. 9, the content display method may include the following steps.

S901: Start a target interface from a current interface.

In this embodiment of this application, the application framework layer of the electronic device 100 may start, in response to an operation performed by a user on the current interface, the target interface corresponding to the operation.

S902: Obtain a parameter of the target interface.

S903: Configure the target interface.

In this embodiment of this application, the application framework layer of the electronic device 100 may obtain the parameter of the target interface from a configuration file of the target interface, where the parameter herein may include, for example, a running mode of the target interface, access permission of the target interface, and the like, and configure the target interface.

S904: Obtain a reusable task stack including the target interface.

In this embodiment of this application, the application framework layer of the electronic device 100 may traverse all task stacks (including a task stack corresponding to a window displayed on a screen of the electronic device and a task stack corresponding to a window running in a background) that have a same taskAffinity attribute as the target interface, to determine whether the task stack includes an instance of the target interface, that is, the reusable task stack.

S905: Clear all instances to a top of the reusable task stack, including the instance of the target interface.

In this embodiment of this application, at the application framework layer of the electronic device 100, an instance that is of another interface and that is arranged after the instance of the target interface in the reusable task stack may be deleted, and the instance of the target interface is also deleted. The instance of the target interface is created in a focus task stack corresponding to a window of the current interface, and the instance of the target interface is set at the top of the task stack, so that the target interface is displayed in the window of the current interface.

It may be understood that step S904 may further include the following steps.

S904a: Search for a task stack.

S904b: Traverse all task stacks.

In this embodiment of this application, the application framework layer of the electronic device 100 may traverse all task stacks that have a same taskAffinity attribute as the target interface, to search for a task stack in which the instance of the target interface exists.

S904c: Determine whether to skip a task stack that is currently being traversed.

In this embodiment of this application, the application framework layer of the electronic device 100 may determine whether the instance of the target interface exists in the task stack that is currently being traversed. If the instance of the target interface does not exist in the task stack, S904d is performed, to skip the task stack that is currently being traversed, and continue to traverse a next task stack. If the instance of the target interface exists in the task stack, S904e is performed, to determine that the instance of the target interface is found.

S904d: Find a task stack that needs to be skipped.

In this embodiment of this application, if the taskAffinity attribute of the interface of the application at the top of the task stack that is currently being traversed is the same as the current interface, the application framework layer of the electronic device 100 may skip the task stack that is currently being traversed.

S904e: Find an instance of a reusable target interface.

S904f: Return to the reusable task stack.

In this embodiment of this application, if the application framework of the electronic device 100 determines that the instance of the target interface exists in the task stack that is currently being traversed, the task stack that is currently being traversed is returned as the reusable task stack.

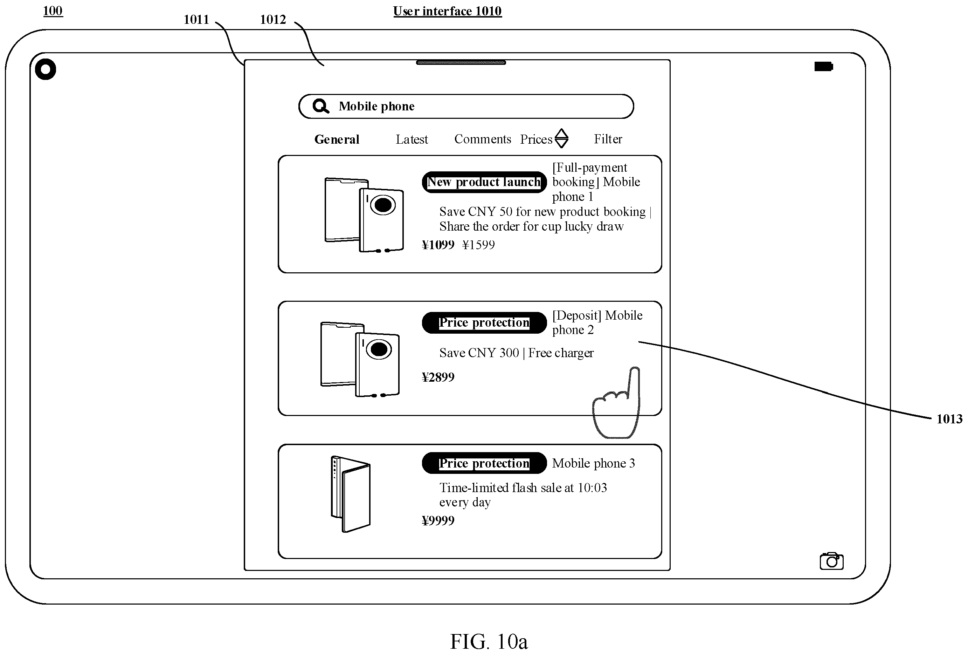

In the content display method of the electronic device 100 shown in FIG. 7a to FIG. 7e, the electronic device 100 always enables the "app multiplier mode". The following describes a content display method of an electronic device 100 according to another embodiment of this application with reference to FIG. 10a to FIG. 10e. It may be understood that, in the content display method of the electronic device 100 shown in FIG. 10a to FIG. 10e, the electronic device 100 may first enable an "app multiplier mode" and then disable the "app multiplier mode".

With reference to FIG. 10a to FIG. 10e, FIG. 10a to FIG. 10e show examples in which the electronic device 100 displays, on a screen, user interfaces including a shopping application.

As shown in FIG. 10a, a user interface 1010 is the screen of the electronic device 100. A first window 1011 (a main window) is displayed on the user interface 1010, and an interface 1012 of the shopping application is displayed in the first window 1011. Overview information of a plurality of found commodities belonging to a mobile phone type is displayed on the interface 1012 of the shopping application. A control 1013 is displayed on the interface 1012 of the shopping application, and commodity information corresponding to a mobile phone "mobile phone 2" is displayed on the control 1013.

In some embodiments of this application, herein, the first window may be the first window 1011, and the first interface may be the interface 1012 of the shopping application, namely, a commodity overview interface of the shopping application.

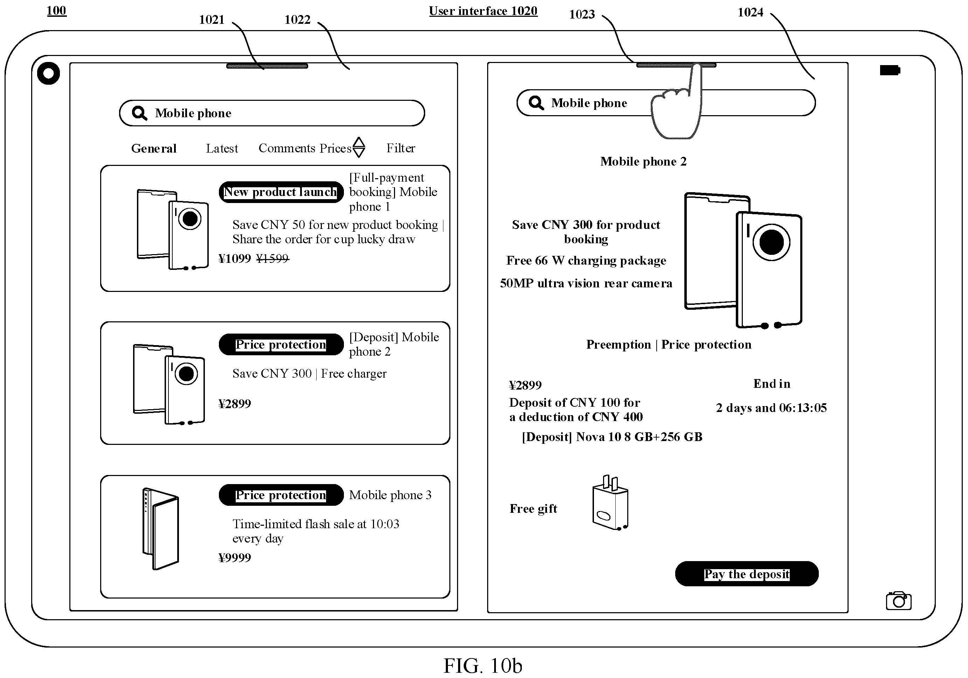

In this case, the electronic device 100 is set to the "app multiplier mode". When the electronic device 100 receives, on the user interface 110 shown in FIG. 10a, an operation performed by the user on the control 1013, the electronic device 100 displays, in response to the operation, a user interface 1020 of the screen of the electronic device 100 shown in FIG. 10b. A first window 1021 (a main window) and a second window 1023 (an auxiliary window) are displayed on the user interface 1020, an interface 1022 of the shopping application is displayed in the first window 1021, and an interface 1024 of the shopping application is displayed in the second window 1023. The first window 1021 and the second window 1023 are arranged in parallel for display. The commodity information corresponding to the "mobile phone 2" is displayed on the interface 1024 of the shopping application.

In some embodiments of this application, herein, the first window may be the first window 1021, the second window may be the second window 1023, and the first interface and the second interface may be interfaces of the shopping application installed on the electronic device 100, namely, the interface 1022 of the shopping application and the interface 1024 of the shopping application, namely, the commodity overview interface and a commodity details interface of the shopping application.

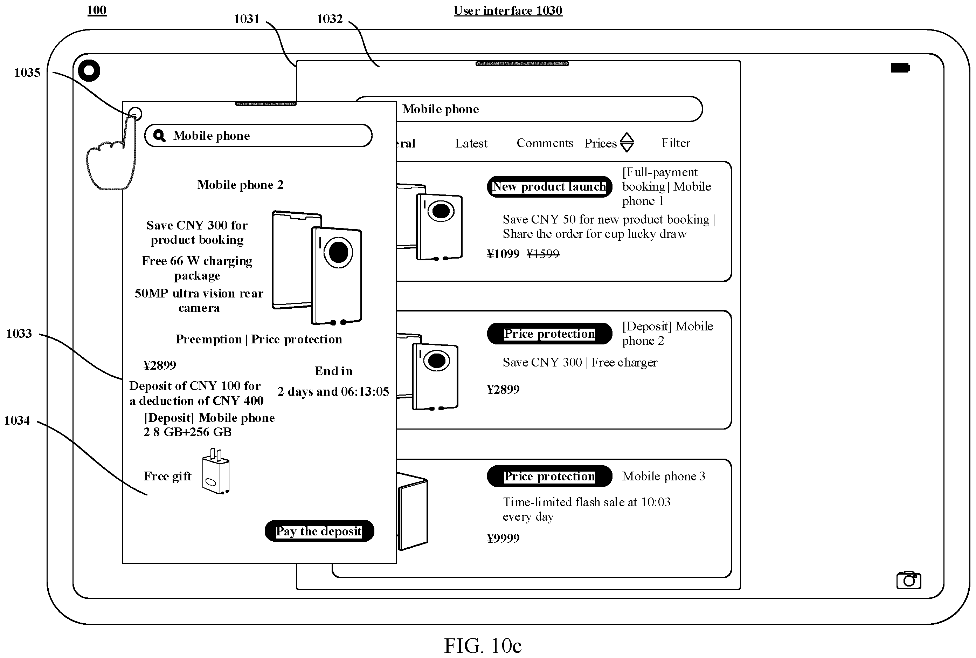

When the electronic device 100 receives, on the user interface 1020 shown in FIG. 10b, an operation performed by the user on an upper side of the second window 1023, the electronic device 100 displays, in response to the operation, a user interface 1030 of the screen of the electronic device 100 shown in FIG. 10c. A first window 1031 and a second window 1033 are displayed on the user interface 1030, an interface 1032 of the shopping application is displayed in the first window 1031, and an interface 1034 of the shopping application is displayed in the second window 1033. The second window 1033 is displayed in the first window 1031 in a floating window manner. A "minimize" control 1035 is displayed in the second window 1033.

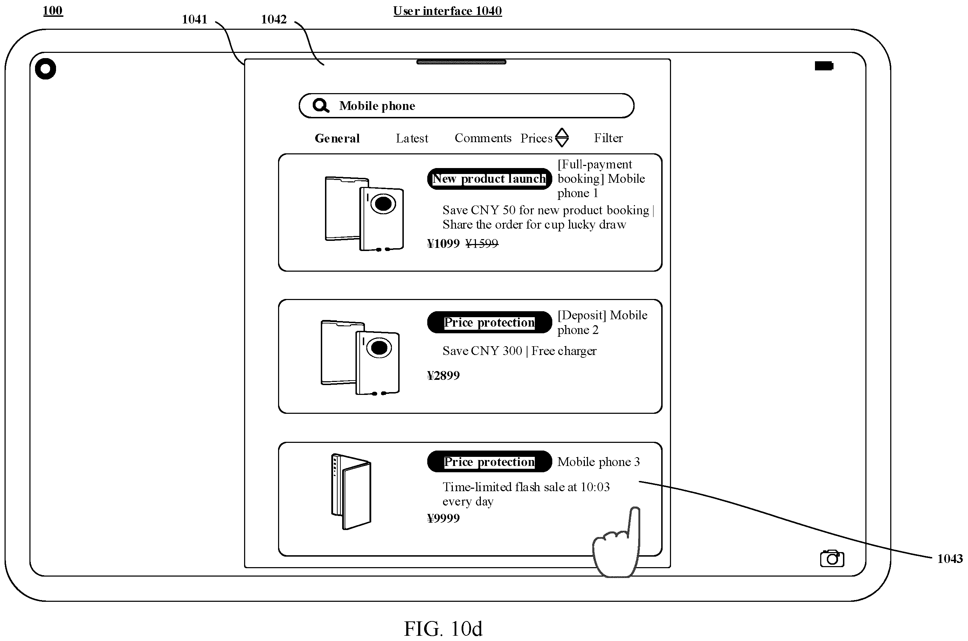

When the electronic device 100 receives, on the user interface 1030 shown in FIG. 10c, an operation performed by the user on the control 1035, the electronic device 100 displays, in response to the operation, a user interface 1040 of the screen of the electronic device 100 shown in FIG. 10d. A first window 1041 is displayed on the user interface 1040, and an interface 1042 of the shopping application is displayed in the first window 1041. A control 1043 is displayed on the interface 1042 of the shopping application, and commodity information corresponding to a mobile phone "mobile phone 3" is displayed on the control 1043.

It may be understood that, in this case, the second window 1033 in FIG. 10c is minimized for display or is run in the background.

In some embodiments of this application, herein, the first window may be the first window 1041, and the first interface may be the interface 1042 of the shopping application, namely, a commodity overview interface of the shopping application.

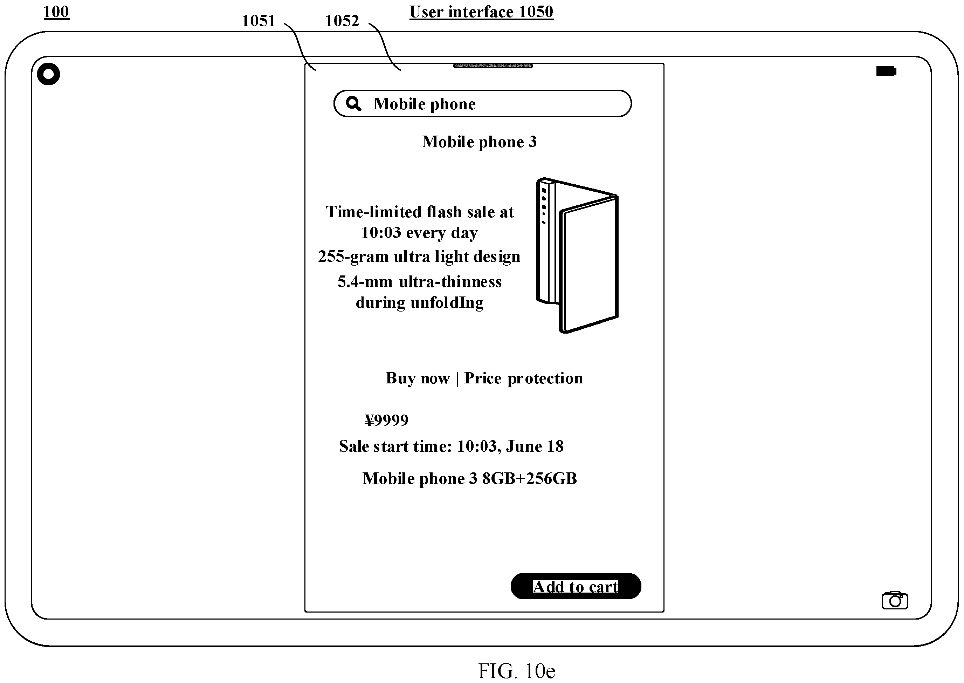

In this case, the electronic device 100 disables the "app multiplier mode". When the electronic device 100 receives, on the user interface 1040 shown in FIG. 10d, an operation performed by the user on the control 1043, the electronic device 100 displays, in response to the operation, a user interface 1050 of the screen of the electronic device 100 shown in FIG. 10e. Only a first window 1051 is displayed on the user interface 1050, the first window 1051 displays an interface 1052 of the shopping application, and the commodity information corresponding to the "mobile phone 3" is displayed on the interface 1052 of the shopping application.

It should be understood that although terms such as "first" and "second" may be used herein to describe various features, these features should not be limited by these terms. These terms are merely used for distinction, and shall not be understood as an indication or implication of relative importance. For example, without departing from the scope of the example embodiments, a first feature may be referred to as a second feature, and similarly the second feature may be referred to as the first feature.

Furthermore, various operations will be described as a plurality of separate operations in a manner that is most conducive to understanding illustrative embodiments. However, a described sequence should not be construed as implying that these operations need to depend on the described sequence. A plurality of these operations may be performed in parallel, concurrently, or simultaneously. In addition, the sequence of the operations may be further rearranged. The processing may be terminated when the described operations are completed, but may also have additional operations not included in the figures. The processing may correspond to a method, a function, a procedure, a subroutine, a subprogram, or the like.

References to "an embodiment", "embodiments", "an illustrative embodiment", and the like in the specification indicate that the described embodiment may include a specific feature, structure, or property, but each embodiment may or may not necessarily include the specific feature, structure, or property. In addition, these phrases are not necessarily intended for a same embodiment. In addition, when specific features are described with reference to specific embodiments, knowledge of a person skilled in the art can affect combination of these features with other embodiments, regardless of whether these embodiments are explicitly described.

Unless otherwise stated, terms "contain", "have", and "include" are synonymous. A phrase "A/B" indicates "A or B". The phrase "A and/or B" indicates "(A), (B), or (A and B)".

As used herein, the term "module" may refer to being a part thereof, or include a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another proper component that provides the function.

In the accompanying drawings, some structure or method features may be shown in a specific arrangement and/or order. However, it should be understood that such a specific arrangement and/or order is not required. In some embodiments, these features may be described in a manner and/or order different from that shown in the descriptive accompanying drawings. In addition, structure or method features included in a specific accompanying drawing do not mean that all embodiments need to include such features. In some embodiments, these features may not be included, or these features may be combined with other features.

Embodiments of this application are described above in detail with reference to the accompanying drawings. However, use of the technical solutions of this application is not limited to various applications mentioned in embodiments of this application, and various structures and variations may be easily implemented with reference to the technical solutions of this application, to achieve various beneficial effects mentioned in this specification. Without departing from the purpose of this application, any variation made within the scope of knowledge possessed by a person of ordinary skill in the art shall fall within the scope of this application.

## Claims

1. A content display method, applied to an electronic device, wherein the electronic device comprises a plurality of task stacks, and the method comprises:
displaying, by the electronic device, a first window, wherein the first window is used to display a first interface; and
displaying a target interface in a second window in response to an operation of a user on the first interface, wherein the second window and the first window belong to a first task stack, the first task stack is one of the plurality of task stacks, and the second window is the same as or different from the first window.

2. The method according to claim 1, wherein when the electronic device is in a state in which a preset display mode is enabled, the second window is different from the first window, and when the electronic device is in a state in which the preset display mode is disabled, the second window is the same as the first window.

3. The method according to claim 2, wherein a running mode of the target interface is a single-instance mode, and the plurality of task stacks and the target interface have a same preset parameter.

4. The method according to claim 3, wherein the displaying a target interface in a second window comprises:
searching the plurality of task stacks in response to the operation on the first interface; and
when finding that a second task stack comprises the target interface, deleting the target interface from the second task stack, and creating the target interface in the first task stack, wherein the second task stack is a task stack that is in the plurality of task stacks and that is different from the first task stack.

5. The method according to claim 4, wherein the deleting the target interface from the second task stack comprises:
when a third window in the second task stack comprises only the target interface, closing the third window.

6. The method according to claim 4, further comprising:
when a second interface covering the target interface further exists in a third window in the second task stack, deleting the second interface simultaneously.

7. The method according to claim 5 or 6, wherein the third window is displayed in a floating window manner or is run in a minimization manner.

8. The method according to claim 3, wherein the displaying a target interface in a second window comprises:
searching the plurality of task stacks in response to the operation on the first interface; and
when the target interface does not exist in the plurality of task stacks, creating the target interface in the first task stack.

9. The method according to claim 3, wherein the displaying a target interface in a second window comprises:
searching the plurality of task stacks in response to the operation on the first interface; and
when the first task stack comprises the target interface, deleting a third interface covering the target interface.

10. The method according to claim 2, wherein when a running mode of the target interface is a multi-instance mode, the target interface is created in the first task stack.

11. An electronic device, comprising:
a memory, configured to store instructions executed by one or more processors of the electronic device; and

12. A computer program product, comprising a non-volatile computer-readable storage medium, wherein the non-volatile computer-readable storage medium comprises computer program code used to perform the content display method according to any one of claims 1 to 10.
